# EUROPÄISCHE PATENTSCHRIFT

(11) **EP 1 108 351 B1**
(45) Veröffentlichungstag und Bekanntmachung des Hinweises auf die Patenterteilung: **25.02.2004**
(21) Anmeldenummer: 00125591.8
(22) Anmeldetag: 22.11.2000
(51) Int. Cl.: A01D 41/14, A01B 63/11

(54) **Erntemaschine mit frontseitig angebautem Erntevorsatz**
Harvesting machine with header mounted to the front
Machine de récolte avec une tête de récolte montée par l'avant

(30) Priorität: 03.12.1999 DE 19958341
(43) Veröffentlichungstag der Anmeldung: 20.06.2001
(73) Patentinhaber: Claas Industrietechnik GmbH, 33428 Harsewinkel (DE)
(72) Erfinder: Rhody, Karl-Thomas, 33165 Lichtenau (DE); Franke, Helmut, 33428 Harsewinkel (DE)

(56) Entgegenhaltungen:
- EP-A- 0 610 900
- EP-A- 0 958 730
- DE-U- 29 507 623
- FR-A- 2 534 771
- US-A- 3 959 957
- US-A- 4 091 602
- US-A- 4 343 140
- US-A- 5 992 146

## Beschreibung

Die Erfindung betrifft eine Erntemaschine mit frontseitig angebautem Erntevorsatz, beispielsweise einen selbstfahrenden Mähdrescher mit einer Schneidwerksbaugruppe, wobei der Emtevorsatz um eine quer zur Fahrtrichtung verlaufende Achse schwenkbar ist und über mindestens eine hydraulische Kolbenzylindereinheit in Abhängikeit von einer am Erntevorsatz angeordneten Hindernistasteinrichtung und einem dieser zugeordneten elektromagnetischen Steuerventil so regelbar ist, daß der Erntevorsatz bei einem von der Hindernistasteinrichtung erfaßten Gegenstand unmittelbar angehoben wird.

Aus der Praxis sind selbstfahrende Mähdrescher bekannt, bei denen die Schneidwerksbaugruppe über zwei einfach wirkende hydraulische Kolbenzylindereinheiten angehoben und abgesenkt werden kann. Zum Anheben des Erntevorsatzes werden die beiden kolbenbodenseitigen Zylinderräume der hydraulischen Kolbenzylindereinheiten mit Öl beaufschlagt, wo hingegen beim Absenkvorgang das Einfahren der Kolbenstangen lediglich durch das Gewicht der Schneidwerksbaugruppe geschieht. Bei der Arbeit auf dem Acker wird die Schneidwerksbaugruppe so eingestellt, daß der Messerbalken einen vorbestimmten Abstand zum Ackerboden aufweist. Zusätzliche Federpakete unterstützen die hydraulischen Kolbenzylindereinheiten und lassen ein gewisses Federn der Schneidwerksbaugruppe beim Einsatz auf dem Acker zu. In ihrem vorderen Bereich weisen die bekannten Schneidwerksbaugruppen Tasteinrichtungen auf, über die beim Erfassen eines Hindernisses ein elektromagnetisches Steuerventil so geschaltet wird, daß die beiden kolbenbodenseitigen Zylinderräume mit Öl beaufschlagt werden, um die Schneidwerksbaugruppe über das Hindernis hinweg abzuheben. Diese bekannte Art des Anhebens einer Schneidwerksbaugruppe hat den Nachteil, daß bei plötzlich auftretenden Hindernissen das Ausheben nicht schnell genug erfolgen kann, da um eine Schnellaushebung durchführen zu können, schlagartig ein sehr großer Ölstrom bereitgestellt werden muß, wobei allerdings die absolut benötigte Ölmenge relativ klein ist. Die Gefahr, die Schneidwerksbaugruppe bei auftretenden Hindernissen nicht schnell genug anheben zu können, ist umso größer, je höher die Fahrgeschwindigkeit des selbstfahrenden Mähdreschers ist.

Der vorliegenden Erfindung liegt daher die Aufgabe zugrunde, eine Erntemaschine der eingangs näher bezeichneten Art so auszugestalten, daß das Ausheben eines Erntevorsatzes beim Erkennen eines Hindernisses unmittelbar erfolgt, ohne die zur Zeit gebräuchlichen Hydraulikeinrichtungen in ihren Abmessungen und Leistungen wesentlich erhöhen zu müssen.

Dies wird erfindungsgemäß dadurch erreicht, daß die hydraulische Kolbenzylindereinheit doppelt wirkend ist und bei nicht betätigter Tasteinrichtung der kolbenbodenseitige Zylinderraum mit dem kolbenstangenseitigen Zylinderraum über das Steuerventil über Leitungen miteinander verbunden ist, wobei zwischen dem kolbenseitigen Raum des Zylinders und dem elektomagnetischen Steuerventil ein Druckspeicher vorgesehen ist und das bei betätigter Tasteinrichtung die Verbindung beider Zylinderräume über das Steuerventil unterbrochen und der kolbenstangenseitige Raum des Zylinders mit einem Tank verbunden ist. Auf vorteilhafte Weise enthält dabei der Druckspeicher im vorgespannten Zustand zumindest die zum erforderlichen Ausfahren der Kolbenstange der hydraulischen Kolbenzylindereinheit benötigte Ölmenge.

Diese Lösung hat gegenüber den bekannten Lösungen den Vorteil, daß keine zusätzlichen Federpakete erforderlich sind, da beim Kurzschluß der beiden Zylinderräume miteinander während des Einsatzes der eingesetzte Druckspeicher wie ein Federpaket wirkt. Der weitere große Vorteil liegt aber darin, daß das gesamte System vorgespannt ist, so daß bei Unterbrechung der Verbindung der beiden Zylinderräume voneinander aufgrund der Änderung der Flächenverhältnisse schlagartig eine Krafterhöhung eintritt, weil nur der kolbenbodenseitige Zylinderraum mit dem anstehenden Druck beaufschlagt wird, während das Öl, daß sich in dem kolbenstangenseitigen Zylinderraum findet, drucklos zum Tank zurückfließen kann. Das Ausheben einer Schneidwerksbaugruppe geschieht demzufolge nach Feststellen eines Hindernisses unmittelbar und ohne jegliche Verzögerung.

Im folgenden soll die Erfindung anhand eines Ausführungsbeispieles und zweier dieses näher darstellender Figuren näher erläutert werden. Dabei zeigt:
- Figur 1: den vorderen Teil eines Mähdreschers mit einer Schneidwerksbaugruppe und einer Tasteinrichtung;
- Figur 2: das Schaltbild zur Durchführung eines Anhebvorganges der Schneidwerksbauguppe nach Figur 1.

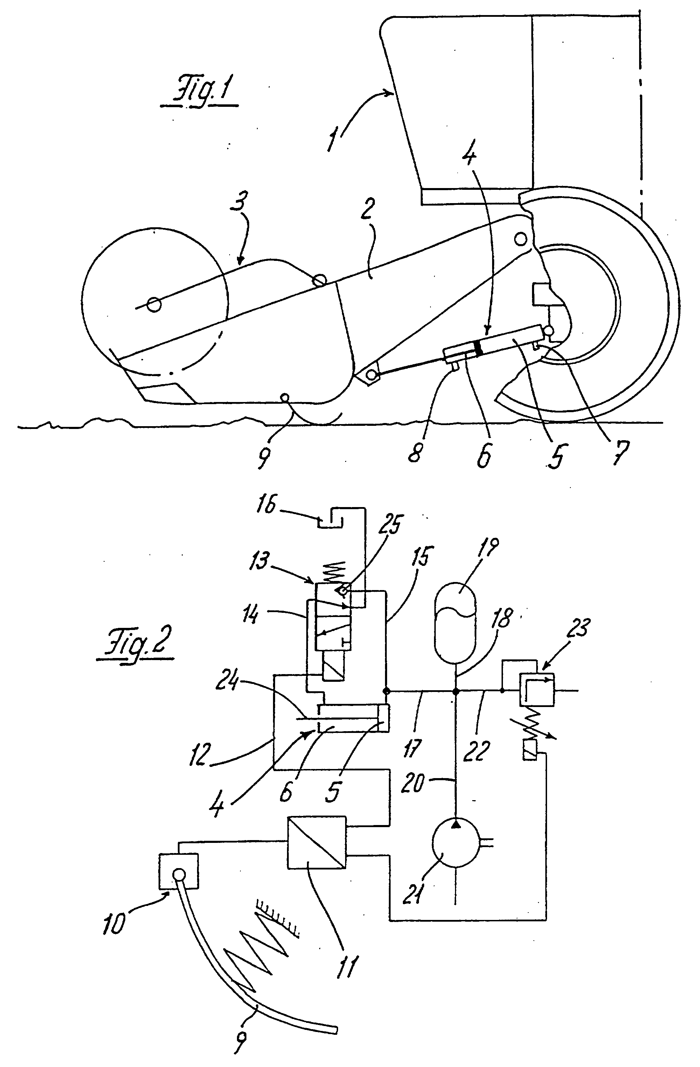

Mit 1 ist ein selbstfahrender Mähdrescher bezeichnet, der frontseitig einen Schrägförderer 2 aufweist, an dem eine Schneidwerksbaugruppe 3 befestigt ist. Die Schneidwerksbaugruppe 3 ist über eine doppelt wirkende hydraulische Kolbenzylindereinheit 4 anheb- und absenkbar, wobei sowohl der kolbenbodenseitige Zylinderraum 5 als auch der kolbenstangenseitige Zylinderraum 6 Leitungsanschlüsse 7 und 8 aufweisen. Weiterhin ist aus der Figur 1 zu erkennen, daß die Schneidwerksbaugruppe 3 im vorderen Bereich eine Tasteinrichtung 9 aufweist. Wie die Figur 4 zeigt, steht die Tasteinrichtung 9 mit einem Sensor 10 in Verbindung, dessen Signale durch den Wandler 11 in elektrische Signale umgewandelt werden, welche dann über eine elektrische Signalleitung 12 dem elektromechanischen Steuerventil 13 zugeführt werden. Dieses Steuerventil 13 steht über eine Leitung 14 mit dem kolbenstangenseitigen Zylinderraum 6 der hydraulischen Kolbenzylindereinheit 4 in Verbindung. Auch der kolbenbodenseitige Zylinderraum 5 ist über eine Leitung 15 mit dem Steuerventil 13 verbunden. Einen weiteren Anschluß weist das Steuerventil 13 mit dem Tank 16 auf. Von der Leitung 15 zweigt eine Leitung 17 ab, mit der über eine Leitung 18 ein Druckspeicher 19 und über eine Leitung 20 eine Pumpe 21 verbunden ist. Eine weitere Leitung 22 führt zu einem Überdruckventil 23.

In der in Figur 2 dargestellten Schaltstellung des Steuerventils 13 ist der kolbenstangenseitige Zylinderraum 6 der hydraulischen Kolbenzylindereinheit 4 mit dem Tank 16 verbunden, während der kolbenbodenseitige Zylinderraum 5 über die Leitungen 17 und 18 mit dem Druckspeicher 19 in unmittelbarer Verbindung steht. Diese Stellung des Steuerventiles 13 wird dann eingenommen, wenn die Tasteinrichtung 9 ein Hindernis aufspürt. Die im Druckspeicher 19 zur Verfügung stehende Ölmenge drückt dann schlagartig die Kolbenstange 24 nach außen, wodurch die Schneidwerksbaugruppe 3, mit der die Kolbenstange 24 verbunden ist, unmittelbar angehoben wird. Durch ein Rückschlagventil 25 wird in diesem Fall verhindert, daß Öl über die Leitung 15 abfließen kann. Nach Überfahren eines Hindernisses schwenkt die Tasteinrichtung 9 in ihre Ausgangsposition zurück, wodurch das Steuerventil 13 so umgeschaltet wird, daß die beiden Leitungen 14 und 15 kurzgeschlossen werden. Der kolbenbodenseitige Zylinderraum 5 steht damit in Verbindung mit dem kolbenstangenseitigen Zylinderraum 6, so daß die Kolbenstange 24 durch das Gewicht der Schneidwerksbaugruppe zurückgefahren und der Speicher gefüllt wird.

### Bezugszeichenliste

- 1 -: Mähdrescher
- 2 -: Schrägförderer
- 3 -: Schneidwerksbaugruppe
- 4 -: Kolbenzylindereinheit
- 5 -: Zylinderraum
- 6 -: Zylinderraum
- 7 -: Leitungsanschlüsse
- 8 -: Leitungsanschlüsse
- 9 -: Tasteinrichtung
- 10 -: Sensor
- 11 -: Wandler
- 12 -: Signaleinrichtung
- 13 -: Steuerventil
- 14 -: Leitung
- 15 -: Leitung
- 16 -: Tank
- 17 -: Leitung
- 18 -: Leitung
- 19 -: Druckspeicher
- 20 -: Leitung
- 21 -: Pumpe
- 22 -: Leitung
- 23 -: Überdruckventil
- 24 -: Kolbenstange
- 25 -: Rückschlagventil

## Patentansprüche

1. Erntemaschine mit frontseitig angebautem Erntevorsatz, beispielsweise selbstfahrender Mähdrescher mit Schneidwerksbaugruppe, wobei der Erntevorsatz um eine quer zur Fahrrichtung verlaufende Achse schwenkbar ist, und über mindestens eine hydraulische Kolbenzylindereinheit (4) in Abhängigkeit von einer am Erntevorsatz angeordneten Tasteinrichtung (9) und einem dieser zugeordneten Steuerventil (13) so regelbar ist, daß der Erntevorsatz bei einem von der Tasteinrichtung (9) erfaßten Hindernis angehoben wird,
**dadurch gekennzeichnet,**
**daß** die hydraulische Kolbenzylindereinheit (4) doppelt wirkend ist und bei nichtbetätigter Tasteinrichtung (9) der kolbenbodenseitige Zylinderraum (5) mit dem kolbenstangenseitigen Zylinderraum (6) über ein Steuerventil (13) über Leitungen (14) und (15) miteinanderverbunden sind, wobei zwischen dem kolbenbodenseitigen Raum (5) des Zylinders und ein Steuerventil (13) ein Druckspeicher (19) vorgesehen ist und das bei betätigter Tasteinrichtung (9) die Verbindung beider Zylinderräume (5, 6) über das Steuerventil (13) unterbrochen und der kolbenstangenseitige Raum (6) des Zylinders mit einem Tank (16) verbunden ist.

2. Erntemaschine mit frontseitig angebautem Erntevorsatz nach Anspruch 1,
**dadurch gekennzeichnet,**
**daß** der Druckspeicher (19) im vorgespannten Zustand zumindest die zum erforderlichen Ausfahren der Kolbenstange (24) der hydraulischen Kolbenzylindereinheit (4) benötigte Ölmenge enthält.

## Claims

1. A harvester with a front-mounted front harvesting attachment, for example a self-propelled combine harvester with a cutting mechanism assembly, wherein the front harvesting attachment is pivotable about an axis extending transversely with respect to the direction of travel and is regulatable by way of at least one hydraulic piston-cylinder unit (4) in dependence on a sensing device (9) arranged at the front harvesting attachment and a control valve (13) associated with the sensing device, in such a way that the front harvesting attachment is lifted at an obstacle detected by the sensing device (9), **characterised in that** the hydraulic piston-cylinder unit is double-acting and when the sensing device (9) is not actuated the cylinder chamber (5) at the piston crown side and the cylinder chamber (6) at the piston rod side are connected together by way of a control valve (13) by way of conduits (14) and (15), wherein a pressure storage means (19) is provided between the chamber (5) of the cylinder at the piston crown side and a control valve (13) and when the sensing device (9) is actuated the connection of the two cylinder chambers (5, 6) is interrupted by way of the control valve (13) and the chamber (16) of the cylinder at the piston rod side is communicated with a tank (16).

2. A harvester with a front-mounted front harvesting attachment according to claim 1 **characterised in that** in the prestressed condition the pressure storage means (19) contains at least the amount of oil needed for the required extension of the piston rod (24) of the hydraulic piston-cylinder unit (4).

## Revendications

1. Machine de récolte comportant un outil frontal monté à l'avant de la machine, par exemple moissonneuse-batteuse automotrice équipée d'un module de coupe, l'outil frontal pouvant pivoter autour d'un axe qui s'étend transversalement à la direction de déplacement et pouvant être réglé à l'aide d'au moins un ensemble vérin (4) hydraulique en fonction d'un dispositif de palpage (9) disposé sur l'outil frontal et d'au moins une valve de commande (13) associée à celui-ci, de telle sorte que l'outil frontal soit soulevé lorsque le dispositif de palpage (9) détecte un obstacle, **caractérisée en ce que** l'ensemble vérin (4) hydraulique est à double action, **en ce qu'**en l'absence de sollicitation du dispositif de palpage (9), la chambre de vérin (5), côté fond de piston, est mise en communication avec la chambre de vérin (6), côté tige de piston, par l'intermédiaire d'une valve de commande (13) et de conduites (14) et (15), un accumulateur de pression (19) étant prévu entre la chambre de vérin (5) du cylindre et une valve de commande (13), et **en ce qu'**en présence d'une sollicitation du dispositif de palpage (9), la liaison entre les deux chambres de vérin (5, 6) par l'intermédiaire de la valve de commande (13) est interrompue et la chambre (6) côté tige de piston du vérin est mise en communication avec un réservoir (16).

2. Machine de récolte avec un outil frontal monté à l'avant de la machine selon la revendication 1, **caractérisée en ce que** l'accumulateur de pression (19), à l'état précontraint, contient au moins la quantité d'huile nécessaire pour la sortie de la tige de piston (24) de l'ensemble vérin (4) hydraulique.
